# EUROPEAN PATENT SPECIFICATION

(11) **EP 4 413 569 B1**
(45) Date of publication and mention of the grant of the patent: **29.01.2025**
(21) Application number: 22835790.1
(22) Date of filing: 15.12.2022
(51) Int. Cl.: G11B 5/706, G11B 5/667

(54) **MAGNETIC RECORDING TAPE AND APPARATUS**
MAGNETISCHES AUFZEICHNUNGSBAND UND GERÄT
BANDE ET APPAREIL D'ENREGISTREMENT MAGNÉTIQUE

(30) Priority: 24.01.2022 US 202217648758
(43) Date of publication of application: 14.08.2024
(73) Proprietor: International Business Machines Corporation, Armonk, NY 10504 (US)
(72) Inventor: LANTZ, Mark Alfred, ZH 8803 Rueschlikon (CH); ROTHUIZEN, Hugo, ZH 8803 Rueschlikon (CH); FURRER, Simeon, ZH 8803 Rueschlikon (CH); FONTANA, Robert, San Jose, CA 95120-6099 (US)
(74) Representative: IBM United Kingdom Limited
(86) International application number: PCT/EP2022/086109
(87) International publication number: WO 2023/138850

(56) References cited:
- US-A1- 2002 028 357
- US-A1- 2006 093 865
- US-A1- 2007 087 225
- US-A1- 2019 378 540
- US-A1- 2020 312 358
- ENDO KATSUMI ET AL: "Metal Particulate (MP)/Metal Evaporation (ME) Double-Layered Media for High-Density Recording", JAPANESE JOURNAL OF APPLIED PHYSICS, vol. 38, no. Part 2, No. 4A, 1 April 1999 (1999-04-01), pages L 374 - L376, XP093032728, Retrieved from the Internet <URL:https://iopscience.iop.org/article/10.1143/JJAP.38.L374/pdf>

## Description

### BACKGROUND

The present invention relates generally to magnetic recording tape. Magnetic recording tape having a perpendicular magnetic recording layer is described, along with methods of producing the tape and storage apparatus employing the tape.

Conventional magnetic tape recording systems use tape media with a magnetic recording layer of barium ferrite particles, applied by a liquid coating process, and a ring write-head for recording data in that layer. In order to scale the areal density of magnetic tape recording systems, it is critical to scale the size/volume of the magnetic particles in the tape media. Reducing the size of the magnetic particles reduces the thermal stability of written data over time. It is therefore necessary to increase the coercivity of the particles to maintain the stability of the data. Unfortunately, increasing the particle coercivity increases the magnitude of the magnetic field required to change the magnetic state of the particles, i.e. to write data, and at some point it becomes difficult to produce sufficient field.

The Hard Disk Drive (HDD) industry pioneers developments in magnetic recording due to the proliferation of hard disks in modern technology and the huge budgets available for research and development. Around 2005, the HDD industry commercialized a solution to the above problem whereby the ring write-head was replaced with a probe (monopole) write-head in combination with a sputtered disk medium that incorporates a soft-magnetic underlayer. This defined a move away from longitudinal recording, in which the axis of easy magnetization in the recording layer is parallel to the disk surface, to perpendicular recording. With a perpendicular magnetic recording layer, the axis of easy magnetization is perpendicular to the plane of the disk, and the soft-magnetic underlayer provides a return path for flux from the write-head. This design effectively places the recording medium in the write gap of the head, i.e. the medium becomes part of the write-head, enabling production of stronger magnetic fields in the region where data is to be written, and hence higher areal densities.

Due to smaller research budgets in the magnetic tape industry, this industry conventionally follows developments in the HDD industry, and advances in HDD technology are then adopted for magnetic tape. The breakthrough described above was thus applied to magnetic tape, as described in: "Exploratory Experiments in Recording on Sputtered Magnetic Tape at an Areal Density of 148 Gb/in2". Tachibana et al., IEEE Transactions on Magnetics, Vol. 50, No.11, pp. 1-6, Nov. 2014; and "201 Gb/in2 Recording Areal Density on Sputtered Magnetic Tape", Furrer et al., IEEE Transactions on Magnetics, Vol. 54, Issue 2, Feb. 2018. These designs used sputtered media and materials, such as platinum and ruthenium, in the magnetic recording layer as used for perpendicular recording in HDDs. Similarly, Japanese Patent Application Publication No. 2004-362746 and US Patent Application Publication No. 2007/0065682 described perpendicular magnetic recording media, here with a particulate recording layer in conjunction with a soft-magnetic underlayer, in which the magnetic particles in the recording layer were based on the materials used in HDDs, specifically alloys of elements in groups 8 to 11 of the periodic table. US2019378540A1 discloses magnetic tapes comprising magnetic layers having particles suspended in in a binder material or having continuous magnetic films, however not in the same embodiment.

In view of the continuing need for advances in magnetic recording technology, improvements in magnetic tape media would be highly desirable.

### SUMMARY

A first aspect of the present invention provides a magnetic recording tape comprising a tape substrate, a perpendicular magnetic recording layer disposed over the tape substrate, and a soft-magnetic underlayer disposed between the recording layer and the tape substrate. The perpendicular magnetic recording layer comprises magnetic particles suspended in a binder material, and the soft-magnetic underlayer comprises a continuous film of soft-magnetic material. The magnetic particles in the recording layer comprise one of barium ferrite, strontium ferrite, epsilon iron oxide and chromium dioxide.

Tape media embodying this invention depart radically from the approach explained above. The present inventors have broken the convention of following the lead from HDD technology, moving away from the magnetic materials dictated by that technology for recording layers used with soft-magnetic underlayers. Instead, the magnetic particle materials used in embodiments of this invention embrace those used in the old-style particulate tape media. This is a radical move considering that the switch to media with recording layers designed for use with soft-magnetic underlayers was made precisely to improve upon performance of those previous materials. By overcoming the prejudice against what might otherwise have been dismissed as a backwards step towards old technology, the present inventors have achieved a tape medium which is in fact particularly advantageous. The combination of a perpendicular magnetic recording layer comprising magnetic particles defined above (which are chemically very different to the group 8 to 11 alloys of the prior art references), and a soft-magnetic underlayer which is continuous (i.e. non-particulate), provides a magnetic tape which is easy to fabricate, inexpensive to produce, and offers excellent areal density and overall performance. This represents a significant advance for magnetic tape storage.

The magnetic particles of preferred embodiments comprise one of barium ferrite and strontium ferrite, most preferably strontium ferrite which offers especially high areal density recording.

The soft-magnetic underlayers of preferred embodiments may incorporate one or more antiferromagnetic or non-magnetic layers. For example, the soft-magnetic underlayer may comprise two continuous films of soft-magnetic material with a very thin (less than 2nm) antiferromagnetic coupling layer disposed between the films, or may comprise a laminate formed of a plurality of continuous films of soft-magnetic material with non-magnetic decoupling layers disposed between the films. These designs reduce noise in the readback process due to domain walls in the soft-magnetic underlayer, improving the SNR (signal-to-noise ratio) on readback.

Preferred embodiments also include a capping layer formed on the soft-magnetic underlayer. Such a capping layer may serve to protect the soft-magnetic underlayer by inhibiting oxidation and/or to tune electrical properties of the tape. Advantageously, this capping layer can be formed in the same vacuum process as the underlayer itself.

In some embodiments, the magnetic particles may include at least one substitution element for tuning coercivity of the particles as described further below. Tapes embodying the invention may also include various additional layers, detailed below, for influencing particular tape properties.

Another aspect of the invention provides a tape storage apparatus comprising a read/write head including at least one probe write-head for writing data by perpendicular recording on magnetic tape, at least one reel of magnetic tape according to the first aspect of the invention above, and a tape transport mechanism for transporting the magnetic tape past the read/write head.

A further aspect of the invention provides a method for producing a magnetic recording tape according to the first aspect of the invention. In this method, the continuous film of soft-magnetic material provided by the soft-magnetic underlayer is produced by one of a sputtering and an evaporation process, and the perpendicular magnetic recording layer is formed over the underlayer by a liquid-coating process.

Embodiments of the invention will be described in more detail below, by way of illustrative and nonlimiting example, with reference to the accompanying drawings.

### BRIEF DESCRIPTION OF THE DRAWINGS

Figure 1 is a schematic illustrating perpendicular recording in a storage apparatus employing magnetic tape, according to at least one embodiment;
Figure 2 illustrates a portion of the components of Figure 1, according to at least one embodiment;
Figure 3 is a schematic cross-section of a magnetic tape, according to at least one embodiment;
Figure 4 is a schematic cross-section showing a modification to the magnetic tape of Figure 3, according to at least one embodiment;
Figure 5 is a schematic cross-section of a magnetic tape, according to at least one embodiment; and
Figure 6 is a schematic cross-section of a magnetic tape, according to at least one embodiment.

### DETAILED DESCRIPTION

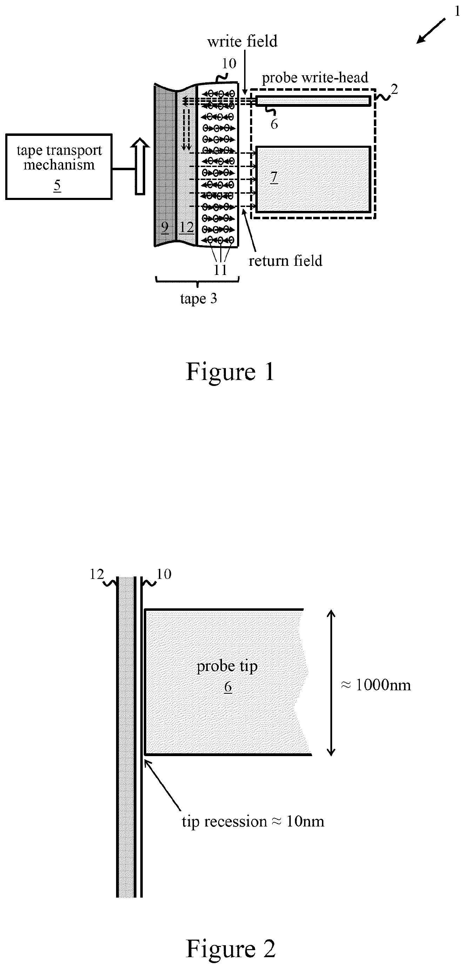

The Figure 1 schematic illustrates operation of a tape storage apparatus embodying the invention for perpendicular recording on magnetic tape. The apparatus 1 has a read/write head which includes at least one probe write-head 2 for writing data on a reel of magnetic tape 3. In practice, the read/write head of apparatus 1 may include one or more write modules each including multiple probe write elements 2 for writing data in respective tracks of the tape 3. For example, a typical read/write head may comprise two write modules, each with multiple (e.g., 32) write elements (plus servo elements for tracking), and a read module with multiple read elements (not shown) for readback of data from the tape tracks. The tape reel is housed in a cartridge/cassette (not shown) which is loaded and presented to the head for read/write operations. The storage apparatus 1 typically includes a library of tape cartridges which can be selected and loaded automatically to one or more drives as is well known in the art, where each drive includes a read/write head as described above. During read/write operations, a tape transport mechanism, indicated schematically at 5, operates to transport the tape 3 past the head in generally known manner.

The probe write-head 2 comprises a monopole tip 6 and a return pole 7 for writing data by perpendicular recording on the tape 3. The tape 3 comprises a tape substrate 9 and a perpendicular magnetic recording layer 10 disposed over the substrate 9. The recording layer 10 comprises magnetic particles suspended in a binder material as described further below. As indicated schematically by the arrows on magnetic particles 11 in the figure, the axis of easy magnetization of the magnetic particles is orientated substantially perpendicularly to the surface of tape 3. The tape 3 further comprises a soft-magnetic underlayer (SUL) 12 which is disposed between recording layer 10 and the tape substrate 9. The SUL 12 comprises a continuous (non-particulate) film of soft-magnetic material as described further below.

In a write operation, magnetic flux from the probe tip 6 passes through the tape medium as indicated schematically by the arrows in the figure. Flux emanating from the tip 6 is substantially perpendicular to the recording layer, whereby the particles are orientated to write a "1" or "0" depending on the direction of the applied field. The SUL 12 provides a return path for the magnetic field to return pole 7 of the write-head.

Figure 2 shows the key components of the recording system drawn approximately to scale. In preferred embodiments of magnetic tape 3, the particulate recording layer 10 has a thickness *t_{R}* in the range 10nm ≤ *t_{R}* ≤ 70nm, and most preferably 10nm ≤ *t_{R}* ≤ 40nm. The SUL 12 preferably has a thickness *t_{S}* in the range 20nm ≤ *t_{S}* ≤ 200nm, most preferably 40nm ≤ *t_{S}* ≤ 120nm. The tape substrate 9 is typically less than 5 microns thick and may be formed, for example, of PEN (polyethylene naphthalate), PET (polyethylene terephthalate), Spaltan substrate material, Aramid (aromatic polyamide) or PEEK (polyetheretherketone). Blends of these and/or other known materials may also be used in substrate 9.

The SUL12 comprises at least one layer of magnetically-soft material such as CoZrNb, FeAISi, Fe₆₅Co₃₅, CoTaZr, FeCoTaZr, CoNiZr, Fe₄₄Co₄₄Zr₇B₄Cu, Ni₈₁Fe₁₉, Ni₄₅Fe₅₅, FeAlN, (Fe₇₀Co₃₀)N, FeTaC and/or other materials well-known in the field. This magnetically-soft layer is formed (directly or indirectly) over the substrate 9 by one one of a sputtering and an evaporation process, thereby producing a continuous (non-particulate) thin film of magnetically-soft material. Well-known sputtering/evaporation techniques can be applied for depositing the SUL 12, particular examples being described in the Tachibana and Furrer references above. In general, the SUL may be deposited by one or more stages of sputtering/evaporation and may have a composite structure as described further below.

In the particulate magnetic recording layer 10, the magnetic particles comprise one of barium ferrite, strontium ferrite, epsilon iron oxide and chromium dioxide. These particles are suspended in a binder material, typically some form of polymer material. Examples of binder materials include hard resins that use polyvinyl chloride-polyvinyl acetate-polyvinyl alcohol terpolymers. Such hard resins can be bound with a softer polyurethane (PU) resin component. Other examples of binder systems include sulfonated (PU) dispersing resins. The particulate magnetic layer can be produced using well-known techniques for particulate recording layers in magnetic tape (see, for example, US Patents Numbers 9,478,331 and 9,378,878). The magnetic particles in this layer are preferably monodisperse, having substantially uniform size, i.e. small standard deviation in particle volume, and preferably also coercivity. The recording layer 10 is formed (directly or indirectly) over SUL 12 by a conventional liquid-coating process in which the tape is drawn past an extrusion head of the coating apparatus to deposit the particulate material on the exposed surface of the tape. The perpendicular orientation of particles in the magnetic layer can be achieved by application of a magnetic field to align the particles during the coating process. In some embodiments, the magnetic particles may include at least one substitution element for tuning coercivity of the particles as described, for example, in the US patents referenced above. Examples of such substitution elements include Zn, Co, Al, Ti, Nb and alloys of these and/or other elements such as Sn, Zr and Mn. The magnetic recording layer of some embodiments may also contain non-magnetic particles, e.g., particles of aluminium oxide, to control the surface roughness and contact between the tape and head as is well known to those skilled in the art.

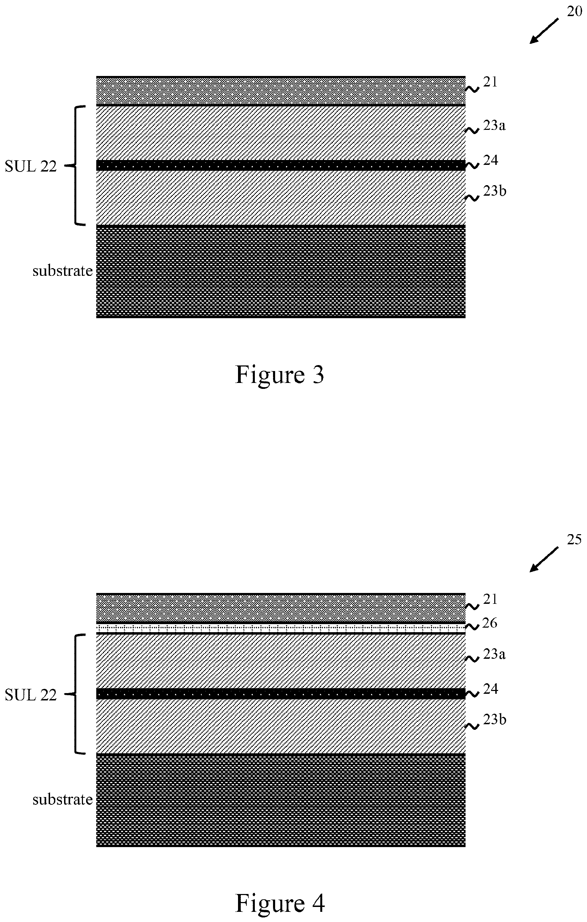

Figure 3 is a schematic cross-section of a preferred magnetic tape 20 embodying the invention. This tape 20 comprises a perpendicularly-oriented particulate magnetic layer 21 in which the magnetic particles comprise one of barium ferrite and strontium ferrite, most preferably strontium ferrite. The recording layer 21 is formed over a composite SUL 22 which comprises two continuous films 23a, 23b of soft-magnetic material with a thin antiferromagnetic coupling layer 24 disposed between these films. The antiferromagnetic coupling layer 24 has a thickness of less than 2nm, preferably about 1nm, and may be formed of antiferromagnetic material such as Ru or IrMn. Soft-magnetic layers 23a, 23b may be formed of various materials as described above, each having a thickness of less than 100nm. As a particular example, SUL 22 may comprise 50nm layers 23a, 23b of CoZrNb and a 1nm Ru coupling layer 24. Each of the constituent layers of SUL 22 are produced by one of a sputtering and an evaporation process, whereby all layers can be deposited in the same vacuum deposition procedure. Magnetic recording layer 21 is applied by a liquid-coating process as described above.

Figure 4 shows a modification to the Figure 3 tape in which like components are indicated by like reference numerals. This tape 25 includes a thin capping layer 26 formed on the SUL 22. This capping layer has a thickness of 1 to 5 nm and is deposited by evaporation/sputtering in the same vacuum deposition process as SUL 22. The material of capping layer 26 can be selected to protect the SUL 22 against oxidation and/or to tune the electrical resistance of the tape media. In particular, if resistivity of the tape is too high, this can cause triboelectric charging and compromise performance. The capping layer material can be selected to enhance electrical conductivity of the tape and thus inhibit tribo-charging. Particular examples of capping layer materials include SiN and carbon-based films such as DLC (diamond-like carbon).

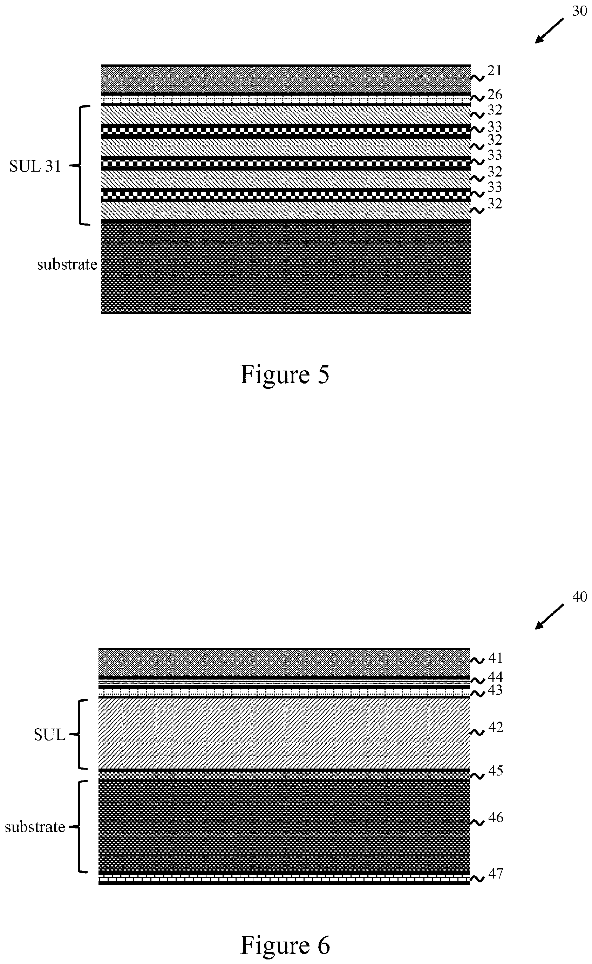

Figure 5 shows a schematic cross-section of another preferred embodiment of the magnetic tape in which components described above are again indicated by like references. This tape 30 has an SUL 31 which comprises a laminate formed of a plurality of continuous films 32 of soft-magnetic material with non-magnetic decoupling layers 33 disposed between the films 32. This example shows four soft-magnetic layers 32, though a multilayer laminate SUL may be formed by multiple layers 32 separated by non-magnetic decoupling layers 33. The layers 32, 33 may be formed of various materials as described above. In a particular embodiment here, SUL 31 may comprise multiple layers 32 of FeALSi, e.g. about 10nm thick, with carbon decoupling layers of about 4nm in between. Each of the constituent layers of SUL 31 is produced by one of a sputtering and an evaporation process, whereby all layers can be deposited in the same vacuum deposition procedure.

The magnetic recording tapes described above, with a sputtered/evaporated SUL and a perpendicularly-orientated particulate magnetic coating, allow high-density recording to be achieved using magnetic tape which is both easy to fabricate and inexpensive to produce. Far higher areal density can be achieved than with conventional magnetic tape and the tape media employing SULs described in the Tachibana and Furrer references above. Use of costly materials such as platinum and ruthenium can be eliminated entirely if desired, or embodiments can utilize such materials at cost-effective levels as for the thin Ru antiferromagnetic coupling layer of Figures 3 and 4. The overall cost of the tape media can thus be very significantly reduced. Moreover, an additional benefit of eliminating the ruthenium intermediate layer used in the tape media of Tachibana and Furrer is that this reduces the distance between the magnetic recording layer and the SUL which further improves the write process, leading to a higher SNR. The composite SUL structures of Figures 3 to 5 also reduce noise in the readback process due to domain walls in the soft-magnetic underlayer, further improving SNR on readback.

The Figure 6 schematic illustrates additional layers which may be included (individually or in combinations) in tape media embodying the invention. The tape 40 shown here has a liquid-coated particulate magnetic layer 41, and an SUL 42 (which may have a composite layer structure as described above) with an SUL capping layer 43. A non-magnetic layer 44 is disposed between the magnetic recording layer 41 and the SUL capping layer 43. This non-magnetic layer 44, which can be deposited by liquid-coating prior to forming the recording layer, can be used to tune the electrical conductivity of the tape surface and/or to tune the tape surface roughness. Exemplary materials for this layer 44 include polymer materials containing carbon particles, where the amount of carbon is adjusted to tune electrical conductivity and/or surface roughness. A thin seed layer 45, e.g. of Ta or Ti, is deposited by evaporation or sputtering between the SUL 42 and tape substrate 46. This seed layer can be used to increase adhesion and/or to influence structure of the SUL, e.g. to achieve a desired amorphous or polycrystalline SUL material structure. A back-coat layer 47 is also formed on the underside of tape substrate 46, e.g. by a liquid-coating process. The back-coat may be formed, for example, of a polymer loaded with carbon or other filler particles to tune roughness of the underside of the tape and control adhesion during spooling and un-spooling. The magnetic layer 41 and/or non-magnetic underlayer 44 may also include a lubricant (which may be mixed with the binder material or applied as a top-coat) to reduce friction between the tape and read/write head. Where additional layers 44, 45 and 47 are included in tapes embodying the invention, thickness of these layers is preferably minimized as far as possible.

It will be appreciated that various other changes and modifications can be made to the particular embodiments described. In general, where features are described herein with reference to a magnetic tape embodying the invention, corresponding features may be provided in a method of producing magnetic recording tape and in a tape storage apparatus embodying the invention.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of claims. The terminology used herein was chosen to best explain the principles of the embodiments, the practical application or technical improvement over technologies found in the marketplace, or to enable others of ordinary skill in the art to understand the embodiments disclosed herein.

## Claims

1. A magnetic recording tape comprising:
a tape substrate (9, 46);
a perpendicular magnetic recording layer (10,41); comprising magnetic particles (11) suspended in a binder material, disposed over the tape substrate; and
a soft-magnetic underlayer (12,42), comprising a continuous film of soft-magnetic material, disposed between the recording layer (10, 41) and the tape substrate (9, 46), and
wherein said magnetic particles comprise one of barium ferrite, strontium ferrite, epsilon iron oxide and chromium dioxide.

2. A magnetic tape as claimed in claim 1 wherein said magnetic particles comprise one of barium ferrite and strontium ferrite.

3. A magnetic tape as claimed in claim 1 wherein said magnetic particles comprise strontium ferrite.

4. A magnetic tape as claimed in claim 1 wherein the soft-magnetic underlayer comprises two continuous films of soft-magnetic material (32) with an antiferromagnetic coupling layer (33) disposed between the films.

5. A magnetic tape as claimed in claim 1 wherein the soft-magnetic underlayer (31) comprises a laminate formed of a plurality of continuous films of soft-magnetic material with non-magnetic decoupling layers disposed between the films.

6. A magnetic tape as claimed in any preceding claim including a capping layer (43) formed on the soft-magnetic underlayer.

7. A magnetic tape as claimed in claim 1 wherein said magnetic particles include at least one substitution element for tuning coercivity of the particles.

8. A magnetic tape as claimed in claim 1 wherein said magnetic particles are monodisperse.

9. A magnetic tape as claimed in claim 1 including a non-magnetic layer (44) disposed between the magnetic recording layer and the soft-magnetic underlayer.

10. A magnetic tape as claimed in claim 1 including a seed layer (45) disposed between the soft-magnetic underlayer and the tape substrate.

11. A magnetic tape as claimed in claim 1 including a back-coat layer (47), formed on an underside of the tape substrate, for tuning roughness of the underside of the tape.

12. A tape storage apparatus comprising:
a read/write head (2) including at least one probe write-head for writing data by perpendicular recording or magnetic tape;
at least one reel of magnetic tape (3) as claimed in any of claims 1 to 11; and
a tape transport mechanism (5) for transporting the magnetic tape past the read/write Z head.

13. A method for producing a magnetic recording tape, the method comprising:
forming a soft-magnetic underlayer over a tape substrate, the underlayer comprising a continuous film of soft-magnetic material produced by one of a sputtering and an evaporation process; and
forming a perpendicular magnetic recording layer, comprising magnetic particles suspended in a binder material, over the underlayer by a liquid-coating process; and
wherein said magnetic particles comprise one of barium ferrite, strontium ferrite, epsilon iron oxide and chromium dioxide.

14. A method as claimed in claim 13 wherein the soft-magnetic underlayer comprises two continuous films of soft-magnetic material with an antiferromagnetic coupling layer disposed between the films, each of the continuous films and the antiferromagnetic coupling layer being produced by one of a sputtering and an evaporation process.

15. A method as claimed in claim 13 wherein the soft-magnetic underlayer is formed as a laminate comprising a plurality of continuous films of soft-magnetic material with non-magnetic decoupling layers disposed between the films, wherein each of the continuous films and antiferromagnetic coupling layers is produced by one of a sputtering and an evaporation process.

## Patentansprüche

1. Magnetisches Aufzeichnungsband, aufweisend:
ein Bandsubstrat (9, 46);
eine Schicht zum senkrechten magnetischen Aufzeichnen (10, 41); welche magnetische Teilchen (11) aufweist, die in einem Bindermaterial suspendiert sind, das über dem Bandsubstrat angeordnet ist; und
eine weichmagnetische Unterschicht (12,42), welche eine kontinuierliche Dünnschicht weichmagnetischen Materials aufweist, die zwischen der Aufzeichnungsschicht (10, 41) und dem Bandsubstrat (9, 46) angeordnet ist, und
wobei die magnetischen Teilchen eines aus Bariumferrit, Strontiumferrit, ε-Eisenoxid und Chromdioxid aufweisen.

2. Magnetisches Band nach Anspruch 1, wobei die magnetischen Teilchen eines aus Bariumferrit und Strontiumferrit aufweisen.

3. Magnetisches Band nach Anspruch 1, wobei die magnetischen Teilchen Strontiumferrit aufweisen.

4. Magnetisches Band nach Anspruch 1, wobei die weichmagnetische Unterschicht zwei kontinuierliche Dünnschichten weichmagnetischen Materials (32) aufweist, wobei zwischen den Dünnschichten eine antiferromagnetische Kopplungsschicht (33) angeordnet ist.

5. Magnetisches Band nach Anspruch 1, wobei die weichmagnetische Unterschicht (31) ein Laminat aufweist, welches aus einer Mehrzahl von kontinuierlichen Dünnschichten weichmagnetischen Materials ausgebildet ist, wobei zwischen den Dünnschichten nicht-magnetische Entkopplungsschichten angeordnet sind.

6. Magnetisches Band nach einem der vorhergehenden Ansprüche, welches eine Deckschicht (43) umfasst, die auf der weichmagnetischen Unterschicht ausgebildet ist.

7. Magnetisches Band nach Anspruch 1, wobei die magnetischen Teilchen mindestens ein Substitutionselement zum Einstellen der Koerzitivfeldstärke der Teilchen umfassen.

8. Magnetisches Band nach Anspruch 1, wobei die magnetischen Teilchen monodispers sind.

9. Magnetisches Band nach Anspruch 1, welches eine nicht-magnetische Schicht (44) umfasst, die zwischen der magnetischen Aufzeichnungsschicht und der weichmagnetischen Unterschicht angeordnet ist.

10. Magnetisches Band nach Anspruch 1, welches eine Keimschicht (45) umfasst, die zwischen der weichmagnetischen Unterschicht und dem Bandsubstrat angeordnet ist.

11. Magnetisches Band nach Anspruch 1, welches eine hintere Beschichtung (47), die auf einer Unterseite des Bandsubstrats ausgebildet ist, zum Einstellen der Rauheit der Unterseite des Bandes umfasst.

12. Bandspeichervorrichtung, aufweisend:
einen Lese-/Schreibkopf (2), welcher mindestens einen Sondenschreibkopf zum Schreiben von Daten durch senkrechtes Aufzeichnen auf magnetisches Band umfasst;
mindestens eine Spule mit magnetischem Band (3) nach einem der Ansprüche 1 bis 11; und
einen Bandtransportmechanismus (5) zum Vorbeitransportieren des magnetischen Bandes an dem Lese-/Schreibkopf.

13. Verfahren zum Herstellen eines magnetischen Aufzeichnungsbandes, das Verfahren umfassend:
Bilden einer weichmagnetischen Unterschicht über einem Bandsubstrat, wobei die Unterschicht eine kontinuierliche Dünnschicht weichmagnetischen Materials aufweist, welches durch eines aus einem Sputter- und einem Verdampfungsprozess hergestellt wird; und
Bilden einer Schicht zum senkrechten magnetischen Aufzeichnen, welche magnetische Teilchen aufweist, die in einem Bindermaterial suspendiert sind, über der Unterschicht durch einen Flüssigkeitsbeschichtungsprozess; und
wobei die magnetischen Teilchen eines aus Bariumferrit, Strontiumferrit, ε-Eisenoxid und Chromdioxid aufweisen.

14. Verfahren nach Anspruch 13, wobei die weichmagnetische Unterschicht zwei kontinuierliche Dünnschichten weichmagnetischem Materials aufweist, wobei zwischen den Dünnschichten eine antiferromagnetische Kopplungsschicht angeordnet ist, wobei jede der kontinuierlichen Dünnschichten und der antiferromagnetischen Kopplungsschicht durch eines aus einem Sputter- und einem Verdampfungsprozess hergestellt wird.

15. Verfahren nach Anspruch 13, wobei die weichmagnetische Unterschicht als ein Laminat ausgebildet ist, welches eine Mehrzahl von kontinuierlichen Dünnschichten weichmagnetischen Materials aufweist, wobei zwischen den Dünnschichten nicht-magnetische Entkopplungsschichten angeordnet sind, wobei jede der kontinuierlichen Dünnschichten und der antiferromagnetischen Kopplungsschichten durch eines aus einem Sputter- und einem Verdampfungsprozess hergestellt wird.

## Revendications

1. Bande d'enregistrement magnétique comprenant :
un substrat de bande (9, 46) ;
une couche d'enregistrement magnétique (10, 41) perpendiculaire ; comprenant des particules magnétiques (11) en suspension dans un matériau liant disposé au-dessus du substrat de bande ; et
une sous-couche magnétique (12, 42) douce comprenant un film continu de matériau magnétique doux disposé entre la couche d'enregistrement (10, 41) et le substrat de bande (9, 46), et
dans laquelle lesdites particules magnétiques comprennent l'un parmi du ferrite de baryum, du ferrite de strontium, de l'oxyde de fer epsilon et du dioxyde de chrome.

2. Bande magnétique selon la revendication 1, dans laquelle lesdites particules magnétiques comprennent l'un parmi le ferrite de baryum et le ferrite de strontium.

3. Bande magnétique selon la revendication 1, dans laquelle lesdites particules magnétiques comprennent du ferrite de strontium.

4. Bande magnétique selon la revendication 1, dans laquelle les-sous-couches magnétiques douces comprennent deux films continus de matériau magnétique (32) doux avec une couche de couplage antiferromagnétique (33) disposée entre les films.

5. Bande magnétique selon la revendication 1, dans laquelle les sous-couches magnétiques (31) douces comprennent un stratifié formé d'une pluralité de films continus de matériau magnétique doux avec des couches de découplage non magnétiques disposées entre les films.

6. Bande magnétique selon une quelconque revendication précédente, comportant une couche de revêtement (43) formée sur la sous-couche magnétique douce.

7. Bande magnétique selon la revendication 1, dans laquelle lesdites particules magnétiques comportent au moins un élément de substitution pour régler la coercibilité des particules.

8. Bande magnétique selon la revendication 1, dans laquelle lesdites particules magnétiques sont mono disperses.

9. Bande magnétique selon la revendication 1 comportant une couche non magnétique (44) disposée entre la couche d'enregistrement magnétique et la sous-couche magnétique douce.

10. Bande magnétique selon la revendication 1 comportant une couche d'ensemencement (45) disposée entre la sous-couche magnétique et le substrat de bande.

11. Bande magnétique selon la revendication 1 comportant une couche de revêtement arrière (47), formée sur un côté inférieur du substrat de bande pour régler la rugosité du côté inférieur de la bande.

12. Appareillage de stockage sur bande comprenant :
une tête de lecture/écriture (2) comportant au moins une tête d'écriture de sonde pour écrire des données par enregistrement perpendiculaire sur la bande magnétique ;
au moins une bobine de bande magnétique (3) selon l'une quelconque des revendications 1 à 11 ; et
un mécanisme de transport de bande (5) pour transporter la bande magnétique après la tête de lecture/écriture.

13. Procédé de production d'une bande d'enregistrement magnétique, le procédé comprenant :
la formation d'une sous-couche magnétique douce au-dessus d'un substrat de bande, la sous-couche comprenant un film continu de matériau magnétique doux produit par l'un des procédés parmi la pulvérisation ou l'évaporation ; et
la formation d'une couche d'enregistrement magnétique perpendiculaire,
comprenant des particules magnétiques en suspension dans un matériau liant, au-dessus de la sous-couche par un procédé de revêtement en milieu liquide ; et dans lequel lesdites particules magnétiques comprennent l'un parmi le ferrite de baryum, le ferrite de strontium, l'oxyde de fer epsilon et le dioxyde de chrome.

14. Procédé selon la revendication 13, dans lequel la sous-couche magnétique douce comprend deux films continus de matériau magnétique doux avec une couche de couplage antiferromagnétique disposée entre les films, chacun des films continus et la couche de couplage antiferromagnétique étant produit par l'un des procédés parmi la pulvérisation ou l'évaporation.

15. Procédé selon la revendication 13, dans lequel la sous-couche magnétique douce est formée comme un stratifié comprenant une pluralité de film continus de matériau magnétique doux avec des couches de découplage non magnétiques disposées entre les films, dans lequel chacun des films continus et des couches de couplage antiferromagnétiques sont produits par l'un des procédés parmi la pulvérisation ou l'évaporation.
